# DEMANDE DE BREVET EUROPEEN

(11) **EP 0 962 276 A1**
(43) Date de publication de la demande: **08.12.1999**
(21) Numéro de dépôt: 99401301.9
(22) Date de dépôt: 01.06.1999
(51) Int. Cl.: B23K 9/29

(54) **Torche de soudage TIG permettant d'améliorer l'amorçage de l'arc de soudage**

(30) Priorité: 04.06.1998 FR 9807031
(71) Demandeur: LA SOUDURE AUTOGENE FRANCAISE, F-75007 Paris (FR); Sauvageau Commercy Soudure, 55202 Commercy Cedex (FR)
(72) Inventeur: Briand, Francis, 75010 Paris (FR); Vincent, Jean-Pierre,, 75321 Paris Cedex 07 (FR)
(74) Mandataire: Le Moenner, Gabriel

(57) **Abrégé**

L'invention concerne une torche de soudage à l'arc électrique comprenant un corps de torche comportant un porte-électrode (3) et une buse (4), ladite buse (4) étant formée d'au moins une cloison (2) de buse ayant une surface interne (2a) et une surface externe (2b), caractérisée en ce qu'au moins une cloison (8) complémentaire s'étend le long d'au moins une partie de la surface interne (2a) et/ou externe (2b) de la cloison (2) de buse, en ce que l'une desdites cloisons (2, 8) est électriquement conductrice et en ce que l'autre desdites cloisons (2, 8) est électriquement isolante et l'utilisation d'une telle torche dans un procédé de soudage ou de coupage à l'arc électrique sous protection gazeuse, notamment un procédé de soudage TIG, MIG ou MAG.

## Description

La présente invention se rapporte à une torche de soudage permettant d'obtenir un meilleur amorçage d'arc électrique et à son utilisation dans un procédé de soudage à l'arc, notamment TIG, MIG ou MAG.

Lors de la mise en oeuvre d'un procédé de soudage à l'arc électrique, il est nécessaire, au début de l'opération de soudage, de faire s'établir un arc électrique entre une cathode et une anode.

En général, l'établissement de l'arc électrique, encore appelé amorçage, peut être réalisé de deux manières, à savoir par court-circuit ou par mise en oeuvre d'une haute tension.

Plus précisément, un amorçage de type court-circuit consiste à mettre en contact la cathode et l'anode, l'une avec l'autre.

De cette manière, on crée, lors de l'établissement du court-circuit, un appel de courant qui vient échauffer deux extrémités des électrodes en regard l'une de l'autre et il se produit alors un établissement d'un arc électrique lors de l'éloignement progressif des deux électrodes l'une de l'autre.

Ce type d'amorçage par court-circuit est utilisé, notamment, en soudage TIG (Tungstene Inert Gas) où la cathode est constituée par une électrode en tungstène et l'anode est constituée par la pièce à souder.

De manière analogue, l'amorçage par court-circuit est également utilisé en soudage MIG (Metal Inert Gas) où l'anode est un fil fusible et la cathode est, là encore, la pièce à souder.

Il est à noter, toutefois, que lorsque l'anode est un fil fusible, il n'est pas nécessaire d'éloigner l'extrémité du fil fusible de la cathode, lors de l'établissement de l'arc, car l'intensité de courant est généralement suffisamment importante pour faire fondre l'extrémité dudit fil et permettre ainsi à l'arc de s'amorcer.

Il est également possible d'utiliser un amorçage par court-circuit dans la mise en oeuvre d'un procédé de découpe plasma ou dans un procédé de traitement de surface à l'arc électrique.

Cependant, l'amorçage par court-circuit présente un désavantage majeur, à savoir d'imposer le contact entre la cathode et l'anode, ledit contact étant susceptible de provoquer une pollution ou une usure prématurée de la cathode, en particulier, lorsque celle-ci est une électrode en tungstène, nécessitant alors son remplacement plus fréquent.

Ainsi, en soudage TIG, un amorçage par court-circuit engendre un réaffutage fréquent de l'électrode en tungstène.

En outre, il a été observé que des inclusions de tungstène étaient susceptibles de se retrouver dans le cordon de soudure ce qui peut être préjudiciable et néfaste à la qualité dudit cordon de soudure.

Ces problèmes peuvent être en partie au moins résolus grâce à un amorçage de type haute tension.

En effet, ce type d'amorçage met en oeuvre des impulsions de haute tension et ne nécessite pas de contact direct entre l'anode, c'est-à-dire la pièce à souder en soudage TIG, et la cathode.

Cependant, pour des raisons de coût et de sécurité, la génération de la haute tension implique, généralement, que chacune des impulsions de haute tension soit en fait une oscillation amortie à haute tension.

La haute tension ainsi appliquée opère un claquage du diélectrique formé usuellement par le gaz de protection mis en oeuvre en rendant ledit diélectrique conducteur électriquement et en permettant ainsi le passage du courant et l'amorçage d'un arc électrique.

Plus la distance entre la cathode et l'anode est importante, plus l'amplitude de la haute tension nécessaire à l'établissement de l'arc électrique augmente.

Le procédé d'amorçage haute tension est notamment utilisé en soudage TIG, en coupage plasma et en soudage plasma. Dans ce dernier cas, l'arc est amorcé, d'abord entre deux électrodes, puis transféré ensuite à la pièce à souder par le flux gazeux plasmagène.

Parfois l'amorçage haute tension est également utilisé en soudage MIG, en particulier en soudage MIG alternatif où lors de chaque demi-alternance la tension s'annulant et le fil n'étant pas au contact du matériaux à souder, il peut être nécessaire de réamorcer l'arc électrique.

Toutefois, l'amorçage haute tension présente aussi, quant à lui, un certain nombre d'inconvénients.

Ainsi, la mise en oeuvre de hautes tensions engendre, en général, un bruit électromagnétique important susceptible de perturber considérablement l'environnement électromagnétique du soudeur et dont le niveau est sujet à une réglementation sévère.

En effet, le niveau de perturbation est proportionnel à la puissance électrique mise en jeu pendant la phase d'amorçage de l'arc électrique et, quel que soit le procédé de soudage qui utilise cet amorçage haute tension, il convient habituellement de minimiser l'amplitude de la haute tension nécessaire à l'établissement dudit arc électrique.

Pour minimiser ladite amplitude de haute tension nécessaire à l'établissement de l'arc, on peut dans certains cas, utiliser une cathode ou une anode à extrémité pointue et/ou une distance faible anode/cathode.

Ceci est, par exemple, le cas en soudage et en coupage plasma où l'amorçage se fait, en général, entre la tuyère et l'électrode de la torche de soudage plasma utilisée.

En soudage TIG manuel, l'opérateur est, quant à lui, obligé de positionner correctement et précisément l'électrode par rapport à la pièce à souder, ce qui n'est pas facilement réalisable en pratique, de par notamment, la gêne qu'occasionne le masque de soudage.

A l'inverse, en cas de mauvais positionnement de l'électrode par rapport à la pièce à souder, l'amplitude de la haute tension appliquée peut ne pas être suffisante pour amorcer efficacement un arc électrique, et/ou conduire à des temps d'amorçage excessivement long.

Il s'ensuit qu'il est alors nécessaire d'augmenter l'amplitude des impulsions haute tension, ce qui permet d'augmenter la tolérance sur la distance électrode pièce et/ou sur l'affûtage de l'électrode, mais peut conduire, par contre, à un niveau inacceptable de bruit électromagnétique.

Le but de la présente invention est donc de pallier les problèmes existants en amorçage haute tension, de façon à obtenir notamment, une diminution du bruit électromagnétique généré par l'amorçage haute tension et, par ailleurs, un amorçage satisfaisant du point de vue industriel.

En d'autres termes, la présente invention vise à améliorer significativement l'amorçage haute tension d'un arc électrique au moyen d'une torche de soudage ou coupage munie d'une électrode.

La présente invention concerne alors une torche de soudage ou coupage à l'arc électrique comprenant un corps de torche comportant un porte-électrode et une buse, ladite buse étant formée d'au moins une cloison de buse ayant une surface interne et une surface externe, caractérisée en ce qu'au moins une cloison complémentaire s'étend le long et/ou périphériquement à au moins une partie de la surface interne et/ou externe de la cloison de buse, en ce que l'une desdites cloisons est électriquement conductrice et en ce que l'autre desdites cloisons est électriquement non-conductrice, c'est-à-dire électriquement isolante.

Dans le cadre de la présente invention, on entend par cloison électriquement conductrice que la cloison permet d'acheminer et de transmettre le courant électrique en engendrant de faibles tensions.

A l'inverse, on entend par cloison électriquement isolante ou non-condutrice que la cloison ne permet pas d'acheminer et de transmettre le courant électrique en engendrant de faibles tensions.

Selon le cas, la torche selon la présente invention peut comprendre l'une ou plusieurs des caractéristiques suivantes:
- la cloison de buse est électriquement non-conductrice;
- ladite buse et ledit porte-électrode sont reliés par une pièce annulaire, encore appelée siège de pince, fixée au corps de torche, ladite cloison complémentaire étant électriquement conductrice et étant portée au même potentiel électrique que l'électrode;
- ladite buse et ledit porte-électrode sont reliés par une pièce annulaire fixée au corps de torche, ladite cloison complémentaire étant électriquement conductrice et étant portée au potentiel électrique de la pièce à souder ou au potentiel électrique de la terre;
- ladite cloison complémentaire s'étend sur toute la périphérie de la surface interne et/ou externe d'au moins une partie de cloison de buse de la buse;
- l'extrémité aval de ladite cloison complémentaire est située à au moins environ 0,5 cm de l'extrémité aval de la buse, de préférence à environ mi-distance de la buse;
- l'épaisseur de la cloison complémentaire est comprise entre 1 µm et 5 mm, de préférence entre 10 µm et 1 mm;
- la surface interne et/ou externe de la cloison de la buse est au moins partiellement recouverte d'au moins une couche d'au moins un matériau électriquement conducteur choisi parmi l'aluminium, le titane, le molybdène, le nickel, le graphite, le manganèse et les émaux conducteurs, de préférence un alliage de molybdène et de manganèse, ladite couche de matériau formant cloison complémentaire;
- la cloison de buse est réalisée en un matériau électriquement non-conducteur choisi parmi les émaux, les céramiques, de préférence de l'alumine ou un nitrure de silicium;
- la cloison complémentaire est une couche de revêtement électriquement conductrice déposée sur au moins une partie de la surface de la cloison de la buse, de préférence sur la surface interne;
- la cloison complémentaire est un prolongement axial de la pièce annulaire;
- la cloison complémentaire est en contact de la cloison de la buse;
- la cloison complémentaire est espacée de 0 à 5 mm de ladite cloison de la buse.

L'invention concerne, en outre, une buse de soudage susceptible d'équiper une torche de soudage selon l'invention, ayant sensiblement une forme de manchon, de préférence cylindrique ou cylindrotronconique, et étant formée d'une cloison de buse, caractérisée en ce qu'elle est électriquement isolante et en ce qu'elle comporte sur au moins une partie d'au moins l'une de ses surfaces interne ou externe, au moins une couche d'un revêtement électriquement conducteur formant cloison complémentaire.

L'invention a trait, par ailleurs, à l'utilisation d'une torche selon l'invention, dans un procédé de soudage ou de coupage à l'arc électrique sous protection gazeuse, notamment un procédé de soudage TIG, MIG ou MAG.

La présente invention va maintenant être décrite plus en détail à l'aide de schémas de mode de réalisation, donnés à titre illustratif mais non limitatif.

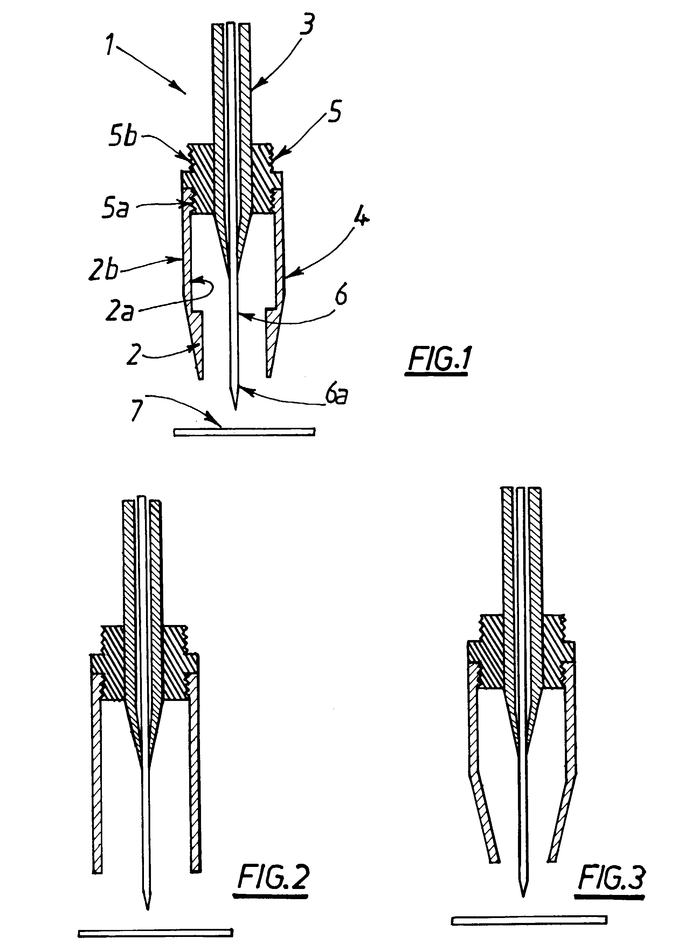

La figure 1 représente le schéma, en coupe transversale, d'une partie de l'extrémité d'une torche 1 de soudage à l'arc électrique, telle une torche TIG, comportant un porte-électrode 3 portant une électrode 6 et une buse 4 ayant sensiblement une forme de manchon, venant entourer une partie dudit porte-électrode 3 et de ladite électrode 6.

La buse 4 est fixée sur le porte-électrode 3 par l'intermédiaire d'une pièce annulaire 5, encore appelée siège-de-pince, fixée, d'une part, audit porte-électrode 3 et, d'autre part, à ladite buse 4 et au corps de torche (non représenté) par l'intermédiaire des filetages 5a et 5b, respectivement.

Le porte-électrode 3 permet de maintenir l'électrode 6 durant l'opération de soudage, durant laquelle un arc électrique est amorcé entre l'extrémité 6a de l'électrode 6 et le matériau 7 à souder ou à couper.

La buse 4 est formée d'une cloison 2 de buse de section sensiblement cylindrotronconique et formant manchon autour de l'électrode 6. La cloison 2 de buse comporte une surface interne 2a et une surface externe 2b.

Habituellement, la cloison de la buse 4 est réalisée en un matériau électriquement non-conducteur, c'est-à-dire isolant, tel un matériau diélectrique, telle une céramique, de préférence l'alumine.

En effet, il est nécessaire que l'impédance de la buse 4 soit relativement élevée pour éviter que le courant de soudage ne puisse y transiter lors de l'amorçage de l'arc électrique ou lors d'un contact entre la buse 4 et la pièce 7 à souder.

En outre, lors d'une opération de soudage, la buse 4 est portée à très haute température, par exemple à plus 1 000°C, et il est donc nécessaire d'utiliser un matériau susceptible de résister à de telles températures.

En fonction des courants de soudage mis en oeuvre et de la nature du gaz de protection utilisé, la buse 4 peut revêtir des formes diverses et avoir des dimensions variables. Ainsi, on a représenté sur les figures 2 et 3 des buses de formes différentes de celle représentée sur la figure 1. Plus précisément, la figure 2 représente une buse à forme sensiblement cylindrique, alors que la figure 3 représente une buse ayant une forme cylindrotronconique.

De manière générale, lorsque l'on souhaite amorcer un arc électrique de soudage entre l'électrode 6 et le matériau à souder 7 et ce, sans mettre au contact direct l'électrode 6 dudit matériau 7, on envoie une ou plusieurs impulsions de haute tension dans l'électrode afin de claquer le diélectrique constitué par le gaz de soudage présent entre l'extrémité 6a de l'électrode 6 et la tôle 7 à souder.

Or, la buse 4 et, plus précisément la cloison 2 de buse est constituée d'un diélectrique, c'est-à-dire qu'elle se trouve à un potentiel électrique différent de celui auquel est porté l'ensemble formé notamment par l'électrode 6, la pièce annulaire 5 et le porte-électrode 3.

Les inventeurs de la présente invention ont mis en évidence que, lorsqu'au moins une partie de la surface intérieure et/ou extérieure de la cloison 2 constituant la buse 4 est recouverte, c'est-à-dire revêtue, d'un matériau conducteur électrique formant une cloison 8 complémentaire électriquement conductrice, laquelle cloison 8 complémentaire ou revêtement est au contact non seulement de la buse 4 mais aussi de la pièce annulaire 5, de manière à porter ledit revêtement au même potentiel que ladite pièce annulaire 5, celle-ci étant elle-même au même potentiel que celui de l'électrode 6, on peut améliorer considérablement l'amorçage de l'arc électrique tout en diminuant l'amplitude de la haute tension nécessaire audit amorçage de l'arc électrique et donc également les perturbations électromagnétiques générées par cette haute tension.

En effet, le fait de revêtir une partie de la surface de la buse 4 d'un matériau conducteur électrique et de porter ce revêtement ou cloison 8 complémentaire au même potentiel que celui de l'électrode ou de la terre, engendre une répartition différente de l'énergie électrique dans ladite buse.

Ainsi, dans le cas d'une buse classique de l'art antérieur, c'est-à-dire une buse ayant une cloison constituée uniquement d'un matériau isolant ayant un comportement de diélectrique, il existe une différence de potentiel entre ladite buse et l'électrode.

Plus précisément, la polarisation de l'électrode induit électrostatiquement des charges de signes opposés sur la surface intérieure de la buse et l'ensemble buse/électrode se comporte alors comme un condensateur électrique cylindrique, dans lequel règne un champ électrique qui stocke une partie de l'énergie électrique.

Il s'ensuit alors que l'énergie ainsi stockée, issue du générateur de haute tension, n'est plus disponible pour l'amorçage et celui-ci se fait donc de manière moins efficace.

A l'inverse, dans une buse conforme à l'invention, l'électrode et au moins une partie de la surface de la buse, de préférence la surface intérieure de la buse, étant au même potentiel, le champ électrique ne se forme plus et toute l'énergie électrique fournie par la source de haute tension est alors disponible et utilisable pour amorcer l'arc de manière plus efficace.

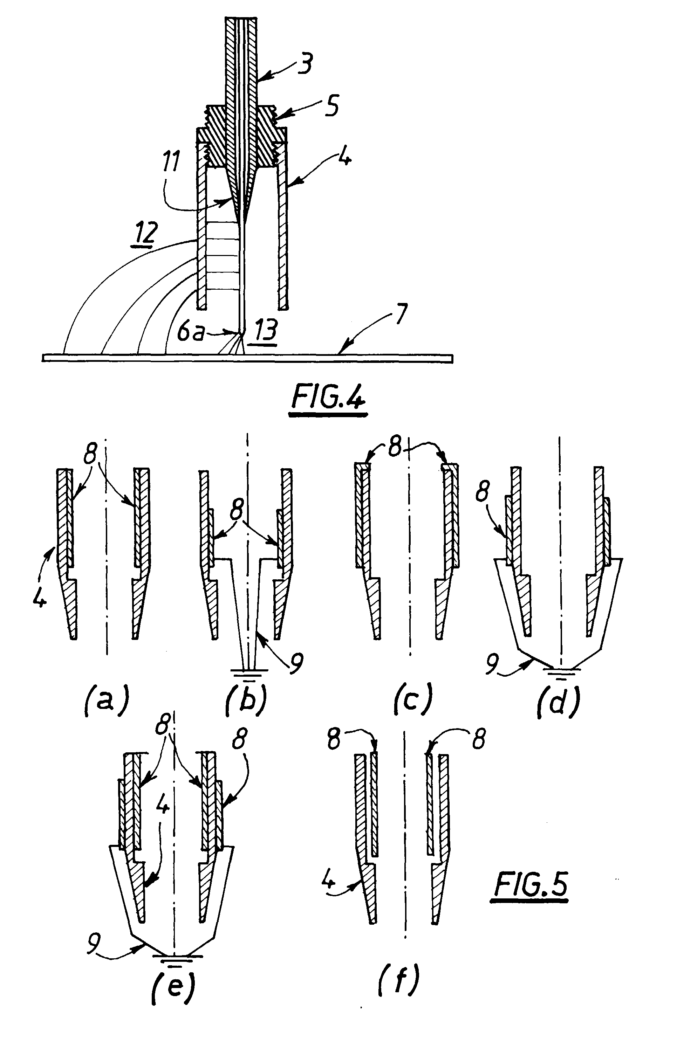

La figure 4 représente schématiquement les lignes de champ électrique susceptibles de se former à l'extrémité d'une torche de soudage comportant une buse 4 analogue à celle représentée sur la figure 2.

Ainsi, lorsque l'on polarise l'électrode, il apparaît des lignes de champ électrique à l'extrémité de la torche de soudage, lesquelles lignes de champ électrique se répartissent en schématiquement trois zones, à savoir une zone interne 11 située à l'intérieure de la buse 4, une zone externe 12 située entre la surface externe de la buse 4 et le matériau 7 à souder, et une zone intermédiaire 13 située entre l'extrémité 6a de l'électrode 6 et le matériau 7.

Le fait de revêtir une partie de la buse 4 avec un matériau électriquement conducteur et de porter ce revêtement ou cloison 8 complémentaire au même potentiel que celui de l'électrode ou de la terre, permet de réduire, voire d'éliminer totalement, l'énergie électrique stockée dans les zones 11 et 12 par le biais des effets capacitifs, ainsi qu'expliqué ci-avant.

Plus précisément, lorsque l'intérieur de la buse 4 est revêtu d'une cloison complémentaire 8 en un conducteur électrique porté au même potentiel que l'électrode 6, il est possible d'éliminer la majeure partie de l'énergie stockée dans la zone 11, mais seulement partiellement, celle de la zone 12.

Par contre, lorsque l'intérieur de la buse 4 est revêtu d'un conducteur électrique porté au potentiel de la terre ou du matériau à souder 7, on assiste alors à une disparition de l'énergie stockée dans la zone 12, mais une légère augmentation de l'énergie résiduelle stockée dans la zone 11 et ce, avec un risque de claquage dans cette zone 11, lorsque la distance séparant le revêtement conducteur de l'électrode 6 est plus faible que la distance séparant l'extrémité 6a de l'électrode 6 de la tôle 7 à souder.

En outre, lorsqu'un conducteur électrique est déposé sur la surface externe de la cloison 2 de la buse 4 et porté au même potentiel que l'électrode, l'énergie stockée dans la zone 11 disparaît alors.

Toutefois, lorsqu'on utilise une buse revêtue sur sa surface externe d'un revêtement électriquement conducteur conforme à la présente invention et porté au potentiel électrique de l'électrode, il convient d'éviter tout contact accidentel entre l'opérateur et la buse pour pallier tout risque d'électrocution dudit opérateur.

A l'inverse, lorsque le conducteur électrique est déposé sur la surface extérieure de la buse 4 et porté au potentiel de la terre ou de la pièce à souder 7, on assiste alors à une disparition de l'énergie stockée dans la zone 12.

Lorsque l'on fait les deux en même temps, on élimine alors non seulement l'énergie stockée dans la zone 11 mais aussi l'énergie stockée dans la zone 12, mais au risque qu'un claquage à travers le diélectrique de la buse 4 se produise.

Il est donc nécessaire que le matériau diélectrique dont est constituée la cloison 2 de la buse 4 soit un diélectrique susceptible de conduire à une isolation électrique efficace.

En d'autres termes, il existe au moins six modes de réalisation différents, lesquels ont été représentés sur les figures 5a à 5f, lesquelles représentent une buse 4 portant un revêtement électrique conducteur ou cloison complémentaire 8 représenté en coupe longitudinale.

Plus précisément, la figure 5a représente une cloison 8 complémentaire formant un revêtement électriquement conducteur sur la surface intérieure de la buse 4, lequel revêtement est porté au même potentiel que celui de l'électrode (non représenté).

La figure 5b est analogue à la figure 5a, à l'exception du fait que le revêtement ou cloison complémentaire 8 est porté au potentiel de la terre 9 ou du matériau à souder.

La figure 5c schématise un revêtement ou cloison 8 électriquement conductrice réalisée sur la surface externe de la buse 4 et porté au même potentiel que celui de l'électrode.

La figure 5d est analogue à la figure 5c, à l'exception du fait que la cloison 8 est portée au même potentiel 9 que la terre ou le matériau à souder.

La figure 5e représente une buse 4 portant deux revêtements électriquement conducteur ou cloisons complémentaires 8, l'une étant portée par la surface interne de la buse 4 et l'autre par la surface externe de ladite buse 4. Le revêtement interne à la buse étant porté au potentiel de l'électrode et le revêtement externe étant porté, quant à lui, au potentiel de la terre.

La figure 5f est analogue à la figure 5a, à l'exception du fait que la cloison complémentaire 8 n'est plus, dans ce cas, au contact de la surface interne de la bue 4, mais est espacée de celle-ci.

Le revêtement ou cloison complémentaire 8 électriquement conducteur peut être constitué en un matériau ou en un alliage de matériau électriquement conducteur, tels l'aluminium, le titane, le molybdène, le nickel, le graphite ou les émaux conducteurs, et peut être déposé sur la buse par des techniques connues de l'homme de l'art, par exemple par pulvérisation, projection ou électrolyse.

Lorsque le revêtement ou cloison 8 complémentaire doit être mis au potentiel de l'électrode 6, il est nécessaire qu'il y est au moins un contact électriquement conducteur entre ledit revêtement ou cloison 8 complémentaire et l'électrode 6, directement ou par le biais de la pièce annulaire et/ou du porte-électrode 3.

Ainsi, lorsque le revêtement ou cloison 8 complémentaire est porté par la surface intérieure de la buse 4, pour effectuer ledit contact électrique, on peut revêtir au moins une partie du filetage de la buse avec ledit matériau électriquement conducteur constituant le revêtement ou cloison 8 complémentaire.

A l'inverse, lorsque le revêtement ou cloison 8 complémentaire est porté par la surface externe de la buse, pour réaliser le contact électrique avec l'électrode 6, on peut revêtir la partie supérieure de la buse 4 avec ledit matériau électriquement conducteur constituant le revêtement ou cloison complémentaire 8.

Il faut noter que le revêtement ou cloison 8 complémentaire doit pouvoir résister, d'une part, à la pression mécanique exercée lors du serrage de la buse sur la pièce annulaire 5 et, d'autre part, à l'échauffement important de ladite buse 4 pendant l'opération de soudage.

En variante, il est également possible de prolonger la pièce annulaire 5, ou éventuellement le corps de torche axialement en direction de l'extrémité 6a de l'électrode 6, de manière à former une cloison 8 complémentaire.

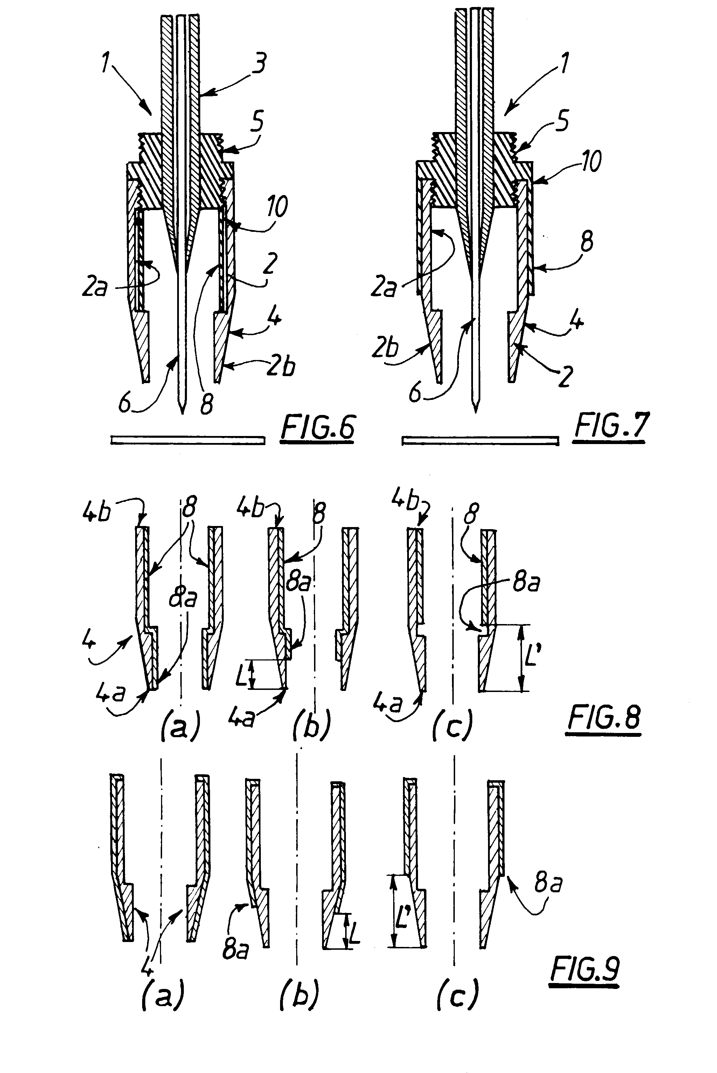

Il s'ensuit alors, que le prolongement 10, formant cloison 8 complémentaire, est constitué du même matériau électriquement conducteur que celui dans lequel est réalisé la pièce annulaire 5 porté par le corps de torche et sur laquelle vient se fixer la buse 4. De tels modes de réalisation sont représentés sur les figures 6 et 7.

De manière générale, la buse 4 comporte une cloison 2 de buse ayant une surface externe 2b et une surface interne 2a et la cloison 8 complémentaire comprend, elle aussi, comme on le voit sur les figures annexées, une surface interne et une surface externe.

De là, lorsque la cloison 8 complémentaire est réalisée par dépôt d'une ou plusieurs couches de revêtement sur, par exemple, la surface interne 2a de la buse 4, on comprend que la surface externe de ladite cloison 8 complémentaire ou couche de revêtement se confond avec la surface interne 2a de la buse 4, en étant en contact avec celle-ci.

En outre, lorsque la cloison 8 est un prolongement 10 de la pièce annulaire 5 alors sa surface externe peut être, là encore, confondue est en contact avec la surface interne 2a de la buse 4 ou, au contraire, espacée de cette dernière d'un distance allant de quelques µm à quelques mm (voir figure 5f).

En outre, les figures 8a à c et 9a à c représentent des schémas, en coupe longitudinale, de buse 4 portant en tant que cloison 8 complémentaire un revêtement électriquement conducteur ou cloison 8 complémentaire sur la surface interne ou externe de la cloison de buse 2, conforment à la présente invention.

Plus précisément, lorsque le revêtement conducteur ou cloison 8 complémentaire porté par la buse 4 est relié au potentiel de l'électrode 6, sa longueur peut être égale à celle de la buse 4, c'est-à-dire que le revêtement, électriquement conducteur peut être effectué sur toute la surface interne et/ou externe de la buse 4 depuis son extrémité amont 4a reliée à la pièce annulaire 5 ou siège de pince jusqu'à son extrémité aval 4b, ainsi que schématisé sur les figures 8a à 9a, respectivement.

Cependant, il n'est pas toujours nécessaire que la longueur du revêtement porté par la buse 4 ait une longueur égale à celle de la buse 4, c'est-à-dire que la cloison 8 peut ne s'étendre que sur une partie seulement de ou des surfaces de la buse 4.

Ainsi, les figures 8b et c et 9b et c représentent des modes de réalisation dans lesquels le revêtement n'est appliqué que sur une partie de la surface intérieure (figures 8b et 8c) ou extérieure (figures 9b et 9c) de la buse 4.

Plus précisément, sur les figures 8b et 9b, l'extrémité 8a de la cloison 8 est située à une distance L égale à approximativement à 0,5 cm de l'extrémité 4a de la buse 4, alors que, sur les figures 8c et 9c, l'extrémité 8a de la cloison complémentaire 8 est située à une distance L' de l'extrémité 4a de la buse 4 égale à approximativement la moitié de la longueur de la buse 4.

La couche de revêtement électriquement conducteur peut avoir une épaisseur variable allant de quelques Angströms à la moitié de la distance qui sépare la surface intérieure de la buse de l'électrode, de préférence entre 10 µm et 1 mm.

Il est à noter cependant que la longueur et l'épaisseur de la couche de revêtement électriquement conducteur vont conditionner l'amélioration de l'amorçage de l'arc électrique et la conduction de la chaleur sur les parties supérieures de la torche de soudage.

### Exemple

Une torche de soudage TIG comprenant une buse de type classique, c'est-à-dire non revêtue d'une couche de revêtement ou cloison 8 complémentaire électriquement conducteur, entourant une électrode en tungstène soumise à une amplitude de haute tension de 8 kV a permis d'obtenir l'amorçage d'un arc électrique d'une longueur de 2 mm (distance électrode pièce à souder); l'amorçage étant réalisé sous flux de protection de type argon.

La même torche TIG est ensuite équipée d'une buse comportant un revêtement électriquement conducteur selon la présente invention, ledit revêtement formant une cloison 8 s'étendant sur la surface intérieure de la buse, ainsi que représenté sur la figure 6.

Dans ce cas, la couche de revêtement a une épaisseur d'environ 30 µm et est constituée d'un dépôt d'un alliage molybdène/ manganèse.

La torche TIG équipée d'une buse selon l'invention est ensuite polarisée avec une amplitude haute tension de 8 kv, ce qui permet d'amorcer un arc électrique d'au moins 4 mm sous un flux de gaz protecteur de type argon.

Il apparaît donc qu'une torche TIG équipée d'une buse selon la présente invention permet d'améliorer nettement l'amorçage de l'arc électrique généré entre l'électrode et la pièce à souder. Ainsi, dans le cas présent, la distance d'amorçage a été multipliée par deux.

Une buse et une torche selon la présente invention présente de nombreux avantages par rapport à celles de l'art antérieur.

## Revendications

1. Torche de soudage à l'arc électrique comprenant un corps de torche comportant un porte-électrode (3) et une buse (4), ladite buse (4) étant formée d'au moins une cloison (2) de buse ayant une surface interne (2a) et une surface externe (2b), caractérisée en ce qu'au moins une cloison (8) complémentaire s'étend le long et/ou périphériquement à au moins une partie de la surface interne (2a) et/ou externe (2b) de la cloison (2) de buse, en ce que l'une desdites cloisons (2, 8) est électriquement conductrice et en ce que l'autre desdites cloisons (8, 2) est électriquement isolante.

2. Torche selon la revendication 1, caractérisée en ce que la cloison (2) de buse est électriquement isolante.

3. Torche selon l'une des revendications 1 ou 2, caractérisée en ce que ladite buse (4) et ledit porte-électrode (3) sont reliés par une pièce annulaire (5) fixée au corps de torche, ladite cloison (8) complémentaire étant électriquement conductrice et étant portée au même potentiel électrique que l'électrode (6).

4. Torche selon l'une des revendications 1 ou 2, caractérisée en ce que ladite buse (4) et ledit porte-électrode (3) sont reliés par une pièce annulaire (5) fixée au corps de torche, ladite cloison (8) complémentaire étant électriquement conductrice et étant portée au potentiel électrique de la pièce à souder (7) ou au potentiel électrique de la terre (9).

5. Torche selon l'une des revendications 1 à 4, caractérisée en ce que ladite cloison (8) complémentaire s'étend sur toute la périphérie de la surface interne et/ou externe d'au moins une partie de la cloison (2) de buse.

6. Torche selon l'une des revendications 1 à 5, caractérisée en ce que l'extrémité aval (8a) de ladite cloison (8) complémentaire est située à au moins environ 0,5 cm de l'extrémité aval (4a) de la buse (4).

7. Torche selon l'une des revendications 1 à 6, caractérisée en ce que l'épaisseur de la cloison (8) complémentaire est comprise entre 1 µm et 5 mm.

8. Torche selon l'une des revendications 1 à 7, caractérisée en ce que la cloison (8) complémentaire est réalisée avec au moins un matériau électriquement conducteur choisi parmi l'aluminium, le titane, le molybdène, le nickel, le graphite, le manganèse et les émaux conducteurs, ou leurs mélanges.

9. Torche selon l'une des revendications 1 à 8, caractérisée en ce que la cloison (2) de la buse (4) est réalisée en un matériau électriquement non-conducteur choisi parmi les céramiques, telle l'alumine.

10. Torche selon l'une des revendications 1 à 9, caractérisée en ce que la cloison (8) complémentaire est au moins une couche de revêtement électriquement conductrice déposée sur au moins une partie de la cloison (2) de la buse (4), de préférence sur la surface interne de la cloison (2) de buse.

11. Torche selon l'une des revendications 1 à 9, caractérisée en ce que la cloison (8) complémentaire est un prolongement axial (10) de la pièce annulaire (5).

12. Torche selon la revendication 11, caractérisée en ce que la cloison (8) complémentaire est en contact de la cloison (2) de la buse (4).

13. Torche selon la revendication 11, caractérisée en ce que la cloison (8) complémentaire est espacée de 0 à 5 mm de ladite cloison (2) de buse (4).

14. Buse (4) de soudage susceptible d'équiper une torche de soudage selon l'une des revendications 1 à 10, ayant sensiblement une forme de manchon, de préférence cylindrique ou cylindrotronconique, et étant formée d'au moins une cloison (2) de buse, caractérisée en ce qu'elle est électriquement isolante et en ce qu'elle comporte sur au moins une partie d'au moins l'une des ses surfaces interne (2a) ou externe (2b), au moins une couche d'un revêtement comprenant au moins un matériau électriquement conducteur formant cloison (8) complémentaire.

15. Utilisation d'une torche selon l'une des revendications 1 à 12, dans un procédé de soudage ou de coupage à l'arc électrique sous protection gazeuse, notamment un procédé de soudage TIG, MIG ou MAG.
